# EUROPÄISCHE PATENTSCHRIFT

(11) **EP 0 829 809 B1**
(45) Veröffentlichungstag und Bekanntmachung des Hinweises auf die Patenterteilung: **19.04.2000**
(21) Anmeldenummer: 97115654.2
(22) Anmeldetag: 10.09.1997
(51) Int. Cl.: G06F 15/80

(54) **Verfahren zur Prozessvisualisierung**
Method for process-visualization
Méthode de visualisation de processus

(30) Priorität: 16.09.1996 DE 19637651
(43) Veröffentlichungstag der Anmeldung: 18.03.1998
(73) Patentinhaber: ABB PATENT GmbH, 68309 Mannheim (DE)
(72) Erfinder: Otte, Ralf, 69469 Weinheim (DE); Speh, Rainer, 64331 Weiterstadt (DE); Goser, Karl, Prof. Dr., 58097 Hagen (DE)
(74) Vertreter: Rupprecht, Klaus, Dipl.-Ing.

(56) Entgegenhaltungen:
- GB-A- 2 277 151
- US-A- 5 043 920
- SYED A ET AL: "REAL-TIME MONITORING AND DIAGNOSING OF ROBOTIC ASSEMBLY WITH SELF-ORGANIZING NEURAL MAPS" PROCEEDINGS OF THE INTERNATIONAL CONFERENCE ON ROBOTICS AND AUTOMAT, ATLANTA, MAY 2 - 6, 1993, Bd. 2, 2.Mai 1993, INSTITUTE OF ELECTRICAL AND ELECTRONICS ENGINEERS, Seiten 188-195, XP000402656
- BARTAL Y ET AL: "NUCLEAR POWER PLANTS TRANSIENT DIAGNOSTICS USING LVQ OR SOME NETWORKS DON'T KNOW THAT THEY DON'T KNOW" INTERNATIONAL CONFERENCE ON NEURAL NETWORKS/ WORLD CONGRESS ON COMPUTATIONAL INTELLIGENCE, ORLANDO, JUNE 27 - 29, 1994, Bd. 6, 27.Juni 1994, INSTITUTE OF ELECTRICAL AND ELECTRONICS ENGINEERS, Seiten 3744-3749, XP000510508

## Beschreibung

Die Erfindung bezieht sich auf ein Verfahren zur mehrdimensionalen Darstellung von Prozeßzuständen einer technischen Anlage.

Das Verfahren ist geeignet zur Darstellung von Prozeßzuständen einer Kraftwerksanlage.

Es ist allgemein bekannt, einzelne Prozeßgrößen meßtechnisch zu erfassen, zu betrachten und auch prozeßzustandsabhängig auszuwerten. Eine bessere Beurteilung eines technischen Prozesses ist jedoch durch eine gleichzeitige, ganzheitliche Betrachtung aller relevanten Prozeßgrößen möglich.

Ein Verfahren mit Merkmalen des Oberbegriffs des Anspruchs 1 ist aus der Druckschrift SYED ET AL: "REAL-TIME MONITORING AND DIAGNOSING OF ROBOTIC ASSEMBLY WITH SELF-ORGANIZING NEURAL MAPS" PROCEEDINGS OF THE INTERNATIONAL CONFERENCE ON ROBOTICS AND AUTOMAT; ATLANTA; MAY 2-6, 1993, Bd. 2, 2. Mai 1993, INSTITUTE OF ELECTRICAL AND ELECTRONICS ENGINEERS, Seiten 188-195, entnehmbar.

Außerdem enthält das Dokument BARTAL Y ET AL: "NUCLEAR POWER PLANTS TRANSIENT DIAGNOSTICS USING LVQ OR SOME NETWORKS DONT'KNOW THAT THEY DONT'KNOW" INTERNATIONAL CONFERENCE ON NEURAL NETWORKS/ WORLD CONGRESS ON COMPUTATIONAL INTELLIGENCE, ORLANDO, JUNE 27-29, Bd. 6, 27. Juni 1994, INSTITUTE OF ELECTRICAL AND ELECTRONIC ENGINEERS, Seite 3744-3749, Hinweise auf Möglichkeiten zur Darstellung von Prozeßzuständen einer Kraftwerksanlage mittels neuronalen Netzwerken. US-A-5,043,920 offenbart eine Datenprojektion auf eine höhenkodierte Karte.

Der Erfindung liegt die Aufgabe zugrunde, ein Verfahren anzugeben, das eine gleichzeitige und zusammenhängige Bewertung und Anzeige relevanter Prozeßgrößen einer technischen Anlage, auch zu unterschiedlichen Zeitpunkten erfaßter Daten, ermöglicht.

Diese Aufgabe wird gelöst durch ein im Anspruch 1 angegebenes Verfahren zur mehrdimensionalen Darstellung von Prozeßzuständen einer technischen Anlage, bei dem alle für einen Prozeß relevanten Größen zusammengefaßt und durch eine neuronale Analyse auf Grundlage selbstorganisierender Karten in Beziehung zueinander ausgewertet werden, indem eine topologieerhaltende, nichtlineare Projektion von Daten der relevanten Prozeßgrößen auf eine mehrdimensionale neuronale Karte realisiert wird, wobei zur Beurteilung aktueller Prozeßzustände
a) auf der Karte zuvor erfaßte Prozeßzustände dargestellt werden, die optimale bzw. fehlerhafte Prozeßzustände oder unterschiedliche Lastzustände sind, und
b) wenigstens eine Trajektorie von Prozeßzuständen dargestellt wird, die zu unterschiedlichen Zeitpunkten ermittelt wurden.

Vorteilhafte Ausgestaltungen sind in weiteren Ansprüchen angegeben.

Ein anderer denkbarer Lösungsansatz wäre die Hauptkomponentenanalyse, also ein mathematisches Verfahren zur Dimensionsreduktion, mit dem angestrebt wird, eine Datenverteilung aus einem hoch-dimensionalen Raum möglichst gut in einem niedrig-dimensionalen Raum zu beschreiben. Bei der Hauptkomponentenanalyse (Varianzanalyse) wird das durch eine lineare Projektion in einem Raum - der durch die Eigenvektoren der Datenverteilung aufgespannt wird - realisiert. Die lineare Projektion bedeutet aber Restriktionen, weshalb die Hauptkomponentenanalyse nicht als befriedigende Lösung der gestellten Aufgabe angesehen wird.

Durch die erfindungsgemäße Anwendung nichtlinearer, neuronaler Methoden wird eine allgemeine Realisierbarkeit des Verfahrens auch für schwierigste Datenverteilungen gewährleistet, sie unterliegt keinen linearen Restriktionen.

Durch den ganzheitlichen Ansatz werden nicht nur die Werte der einzelnen Prozeßgrößen, sondern auch gerade ihre gegenseitigen Einflüsse untereinander berücksichtigt. Das Verfahren läßt sich vorteilhaft erweitern zur Darstellung von transienten Prozeßvorgängen.

Es wird verfahrensgemäß eine Projektion auf nichtlineare Flächen, sogenannte Hauptmannigfaltigkeiten, durchgeführt. Diese nichtlinearen Flächen werden durch sogenannte topologieerhaltende Karten im Zustandsraum der Anlage aufgespannt.

In der neuronalen Theorie versteht man unter einer solchen Karte ein "selbstorganisierendes neuronales Netz", bei dem alle Neuronen nebeneinander angeordnet sind. Das selbstorganisierende neuronale Netz ist ein eingeführter Begriff für eine spezielle Klasse von neuronalen Netzen, die sich anhand von Eingangssignalen selbst strukturieren, vgl. A. Zell "Simulation Neuronaler Netze", Addison-Wesley Verlag, 1994, Seite 179 bis 187. Im eindimensionalen Fall spricht man von einer neuronalen Kette, im zweidimensionalen Fall von einer neuronalen Karte. Im Unterschied zu herkömmlichen neuronalen Netzen, spielt die räumliche Lage der einzelnen Neuronen bei den neuronalen Karten eine wichtige Rolle.

Der durch das Verfahren berechnete Prozeßzustand wird auf dieser topologieerhaltenden Karte von potentiellen Prozeßzuständen aufgetragen und visualisiert und ist weiterhin auch direkt mit anderen, z.B. vorherigen Prozeßzuständen, vergleichbar. Damit stellt die Karte im Prinzip ein topologieerhaltendes, 2-dimensionales Fenster in den n-dimensionalen Zustandsraum der Anlage dar. Topologieerhaltend heißt im Zusammenhang mit dieser Beschreibung, daß die Punkte, die im Eingangsraum nahe beieinander liegen, auch im Ausgangsraum, also auf der Karte, nahe beieinander liegen werden.

Beim erfindungsgemäßen Verfahren werden nach einer entsprechenden Datenvorverarbeitung einem selbstorganisierenden Netz in einer Lernphase die relevanten n Prozeßgrößen angeboten. Die Lernphase erfolgt in zwei Schritten: Zuerst entfaltet sich die Karte im Zustandsraum der Anlage, danach werden die Anlagenzustände auf die zweidimensionale neuronale Karte projiziert. Die Entfaltung der selbstorganisierenden Karte im Zustandsraum der Anlage wird durch den "neuronalen Algorithmus nach T. Kohonen" realisiert. Der selbstorganisierende neuronale Algorithmus wurde von Kohonen im Jahr 1982 eingeführt; vgl. T. Kohonen, "Self-organized formation of topologically correct feature maps" in Biological Cybernetics, 43, 59-69, 1982.

Die Projektion der physikalischen Anlagenzustände auf die entfaltete Karte wird durch eine dynamische Visualisierung von den Gewinnerraten der einzelnen Neuronen durchgeführt. Mittels eines neuronalen "Winner-takes-all" Algorithmus wird das aktuelle Gewinnerneuron bestimmt und die aufsummierten Gewinnerraten der einzelnen Neuronen werden auf der Karte kodiert dargestellt. Der Winner-takes-all Algorithmus ist ein Verfahren, bei dem immer nur das Neuron aktiv ist, das eine gewisse Bedingung am besten erfüllt, alle anderen Neuronen des Netzes oder der Karte sind inaktiv (1-aus-m Auswahl), siehe S. Hafner, "Neuronale Netze in der Automatisierungstechnik", Oldenbourg Verlag, 1994, insbesondere Seiten 17 bis 25.

Für die Visualisierung der Anlagenzustände auf der Karte ist es auch möglich, die Gewinnerraten nicht nur für das aktuelle Gewinnerneuron, sondern mit abfallender Größe (z.B. Gaußfunktion mit Maximum über den Gewinnerneuron) auch für benachbarte Neuronen aufzuaddieren. Damit wird in der Projektionsphase die Erregungsantwort der Karte für einen Eingangsvektor nicht nur auf ein Neuron konzentriert, sondern über eine gewisse Nachbarschaft verteilt. Dieser "Winner-takes-most" Algorithmus kann die Darstellung der Anlagenzustände auf der Karte verbessern.

Mit dieser Projektion wird eine topologieerhaltende Abbildung aller relevanten Anlagenzustände realisiert, d.h. in der Realität verschiedene, z.B. kritische und unkritische, Anlagenzustände werden auch auf der Karte räumlich getrennt voneinander dargestellt. Durch die Wahl der Kodierungen, Farb- und/oder Höhenkodierungen, auf dieser neuronalen Karte werden verschiedene Datencluster für den Prozeßbeobachter visuell aufbereitet.

Eine weitere Beschreibung des Verfahrens erfolgt nachstehend anhand von in den Zeichnungsfiguren dargestellten Ausführungsbeispielen.

Es zeigen:
- Fig. 1: ein Strukturbild, das die wesentlichen Komponenten eines Systems zur Durchführung des Verfahrens zeigt,
- Fig. 2: eine neuronale Karte für zwei verschiedene Anlagenzustände eines Abhitzekessels, und
- Fig. 3 und 4: den Trajektorienverlauf beim Anfahren eines Abhitzekessels.

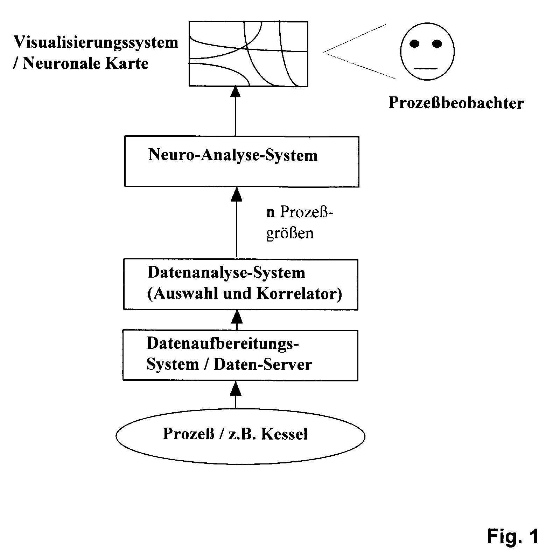

**Fig. 1** zeigt beispielhaft die Struktur eines Systems zur Durchführung des Verfahrens zur Prozeßvisualisierung mit neuronaler Karte.

Ein Datenerfassungs- und -aufbereitungssystem, beispielsweise ein Datenserver basierend auf einem Rechner eines Leitsystems, erfaßt zyklisch Prozeßwerte aus einer technischen Anlage, beispielsweise von einem Abhitzekessel einer Kraftwerksanlage. Ein nachfolgendes Datenanalysesystem unterzieht die ausgewählten und relevanten Daten einer Korrelationsanalyse, um die unabhängigen, prozeßbeschreibenden Meßgrößen zu bestimmen. Die Werte dieser Prozeßgrößen werden anschließend durch den selbstorganisierenden, neuronalen Kohonen-Algorithmus verarbeitet und auf einer neuronalen Karte visualisiert, basierend auf einer Neuro- und Visualisierungssoftware.

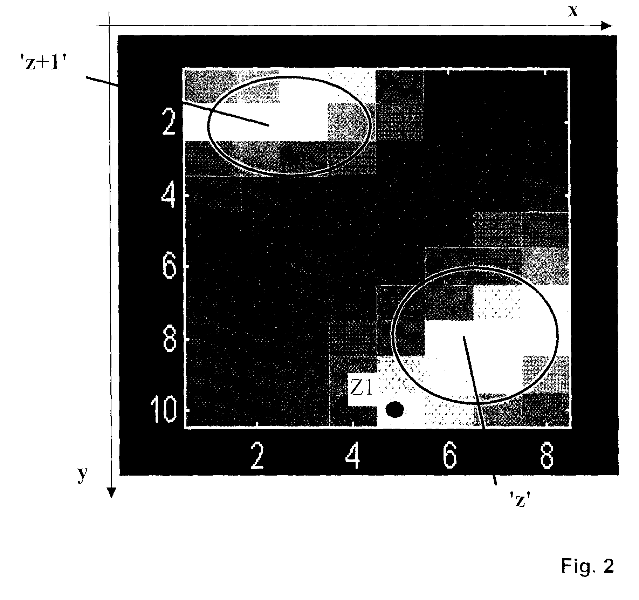

**Fig. 2** zeigt eine damit erzeugbare strukturierte, farbkodierte, neuronale Karte für zwei verschiedene Anlagenzustände eines Abhitzekessels, wobei die hellen zusammenhängenden Flächen die Anlagenzustände z bzw. z+1 darstellen. Die Projektion und Visualisierung von zwei 12-dimensionalen Anlagenzuständen eines Abhitzekessels sind dabei auf einer 2-dimensionalen neuronalen Karte mit 8*10 Neuronen dargestellt.

In Fig. 2 gibt die x-Achse die Anzahl der Neuronen in x-Richtung, die y-Achse die Anzahl der Neuronen in y-Richtung an. Die Anlagenzustände z und z+1 sind zwei beliebige, aber verschiedene Anlagenzustände der technischen Anlage, z.B. zwei verschiedene Lastzustände, z.B. 0% und 92% Last oder kritischer und unkritischer Zustand der Anlage für eine bestimmte Last. In der Lernphase werden der Karte die physikalischen Werte der Prozeßgrößen der tatsächlichen Anlagenzustände, z.B. mehrere Lastzustände angeboten; die selbstorganisierende Karte findet die zugrundeliegenden Strukturen (Cluster) in den Daten und bildet diese -z.B. in Form von zusammengehörigen hellen Flächen- ab. Die dunklen Gebiete auf der Karte bilden die Grenzen zwischen den verschiedenen Anlagenzuständen, da sie Neuronen darstellen, die während der Projektionsphase mit Hilfe des "Winner-takes-all' Algorithmus nur sehr selten oder gar nicht gewonnen haben, ihre Gewinnerraten also nahe NULL sind. Hohe Gewinnerraten werden durch eine Verschiebung in Richtung 'heller' gekennzeichnet. In der praktischen Realisierung lassen sich die Anlagenzustände und die Gewinnerraten noch deutlicher durch unterschiedliche Farben darstellen. Es kann auch eine dreidimensionale Darstellung gewählt werden, wobei Höhenänderungen unterschiedliche Gewinnerraten kennzeichnen.

Obwohl in diesem Beispiel jeder Anlagenzustand durch 12 unabhängige Prozeßgrößen bestimmt wird und damit 12-dimensional ist, kann durch das Verfahren eine Projektion auf nur zwei, bei Darstellung von Höhenänderungen auch drei Dimensionen durchgeführt werden; damit wird eine erheblich bessere Übersichtlichkeit über die tatsächlichen Prozeßzustände erreicht als bei der einzelnen Betrachtung aller 12 Prozeßgrößen. Die Anzahl der gleichzeitig ausgewerteten Prozeßgrößen ist nicht auf zwölf beschränkt, sie kann wesentlich höher sein.

Während des Betriebes einer technischen Anlage, beispielsweise einer Kraftwerksanlage, wird der aktuelle Prozeßzustand durch einen neuronalen Winner-takes-all Algorithmus ausgewertet und auf der vorher strukturierten neuronalen Karte aufgetragen. In Fig. 2 ist der aktuelle Prozeßzustand durch den Punkt Z1 dargestellt. Damit kann der aktuelle, i.a. hochdimensionale Anlagenzustand im Kontext anderer Anlagenzustände visualisiert werden. Die räumliche Lage des aktuellen Prozeßzustandes auf der strukturierten Karte gibt Auskunft über den aktuellen Zustand der Anlage, da durch diese Form der Visualisierung z.B. erkannt werden kann, ob sich die Anlage in einem kritischen oder unkritischen Bereich befindet.

Damit wird einem Prozeßbeobachter -und -bediener die Möglichkeit gegeben, selbst hochkomplexe dynamische Prozesse intuitiv zu erfassen und die Auswirkungen seiner Prozeßeingriffe unmittelbar zu beobachten. Da das Verfahren in der Anwendungsphase echtzeitfähig ist, kann diese Form der Prozeßvisualisierung zur Unterstützung der on-line Prozeßführung verwendet werden.

Durch die Aneinanderreihung von Anlagenzuständen verschiedener Zeitpunkte entsteht eine Trajektorie auf der Karte, deren Form und Lage für Diagnosezwecke herangezogen werden kann.

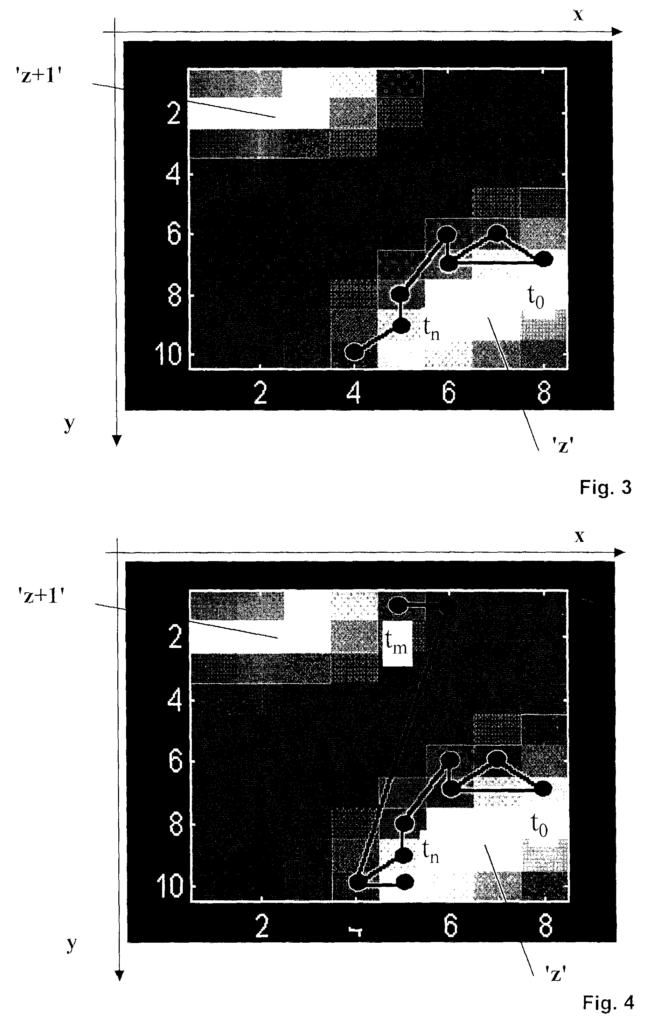

Die **Figuren 3** und **4** zeigen - hier in einer Schwarz/Weiß-Darstellung - beispielhaft einen solchen Trajektorienverlauf auf einer strukturierten, 2-dimensionalen, farbkodierten, neuronalen Karte mit 8*10 Neuronen beim Anfahren eines Kessels. Dabei zeigt Fig. 4 eine im Vergleich zur Fig. 3 zu einem späteren Zeitpunkt erzeugte Darstellung.

Die x-Achse gibt in den Fig. 3 und 4 jeweils die Anzahl der Neuronen in x-Richtung, die y-Achse die Anzahl der Neuronen in y-Richtung an. Die Anlagenzustände z und z+1 (helle Flächen) sind zwei beliebige, aber verschiedene Anlagenzustände der technischen Anlage. In den Zeichnungsfiguren stellen sie verschiedene Lastzustände, z.B. 0% und 92% Last dar. Diese Anlagenzustände sind nach der Trainingsphase von der Karte gelernt und werden in der Anwendungsphase nicht mehr verändert.

In der Anwendungsphase wird das jeweils aktuelle Gewinnerneuron zu einem Zeitpunkt tₖ z.B. durch einen schwarzen Kreis markiert. Verbindet man diese Gewinnerneuronen miteinander, entwickelt sich auf der strukturierten Karte mit der Zeit t (t₀ < tₙ < tₘ) eine Trajektorie der aktuellen Prozeßzustände. Ein Vergleich der Fig. 3 und 4 zeigt, daß die zur Beurteilung herangezogenen Anlagenzustände z und z+1 im zeitlichen Verlauf unverändert bleiben, aber die aktuellen Prozeßzustände sich ändern. Dabei kann ein nach mehreren Erfassungszeitpunkten ermittelter Prozeßzustand mit einem vorherigen Prozeßzustand übereinstimmen, wie beispielsweise die dreieckförmige Verbindung zwischen Prozeßzuständen zeigt. Die in den Figuren 3 und 4 angegebenen Zeiten t₀, tₙ und tₘ stellen nur exemplarische Zeitpunkte dar. In der Anwendung wird nach einem bestimmten, vom Anwender vorgebbaren Zeitintervall Δt das neue Gewinnerneuron berechnet und graphisch markiert. Damit wird in den Figuren 3 und 4 jedem schwarzen Kreis mindestens ein diskreter Zeitpunkt tₖ zugeordnet.

Da auf einer Karte mehrere Trajektorien übereinandergelegt werden können, kann man einen beliebigen Prozeßvorgang mit einem vorherigen Referenzvorgang vergleichen. So lassen sich nicht nur einzelne Prozeßzustände, sondern auch komplexe Prozeßvorgänge miteinander vergleichen; Abweichungen werden sehr schnell erkannt. Damit ist eine ganzheitliche, visuelle Fehlerdiagnose selbst für dynamische Kraftwerksvorgänge möglich.

Nachstehend werden wichtige Verarbeitungsschritte der Erfindung nochmals zusammenfassend aufgezählt:
- 1.: Aufnahme und Auswahl der Prozeßgrößen und Aufbereitung der Daten, z.B. unter Anwendung eines Korrelationsverfahrens.
- 2.: Lernphase der Karte (off-line)
- 2.1.: Entfaltung des selbstorganisierenden, neuronalen Netzes im Zustandsraum der Anlage, basierend auf dem Algorithmus von T. Kohonen. Als Eingangsgrößen für das Netz werden die physikalischen, eventuell normierten Prozeßwerte der relevanten Prozeßgrößen verwendet.
- 2.2.: Darstellung des entfalteten Netzes als Karte. Dieser Schritt kann eventuell mit dem vorherigen Schritt zusammengefaßt sein.
- 2.3.: Projektion der hochdimensionalen Anlagenzustände auf die neuronale Karte, basierend auf "Winner-takes-all" und/oder "Winner-takes-most" Algorithmus; anschließende farb- und/oder höhenkodierte Visualisierung der aufsummierten Gewinnerraten der einzelnen Neuronen auf der Karte.
- Ergebnis:: Die zugrundeliegenden Anlagenzustände sind auf die Karte projiziert und stellen damit z.B. im Fall der höhenkodierten Visualisierung ein statisches 'Gebirge' der relevanten Anlagenzustände dar.
- 3.: Anwendungsphase der Karte (off-line und/oder on-line)
- 3.1.: Anbindung der Karte an den Prozeß und Darstellung des aktuellen Prozeßzustandes auf der strukturierten Karte, indem das Gewinnerneuron nach einem "Winner-takes-all" Algorithmus bestimmt und graphisch, z.B. durch einen schwarzen Kreis gekennzeichnet wird.
- 3.2.: Graphische Verbindung von Gewinnerneuronen, damit entsteht eine Trajektorie auf der Karte, die entweder ständig wächst oder bei fester vorgegebener Länge auf der Karte wandert.
- 3.3.: Übereinanderlegen von Trajektorien verschiedener Prozeßvorgänge für visuellen Vergleich und Analyse komplexer dynamischer Vorgänge.

## Patentansprüche

1. Verfahren zur mehrdimensionalen Darstellung von Prozeßzuständen einer technischen Anlage, bei dem alle für einen Prozeß relevanten Größen zusammengefaßt und durch eine neuronale Analyse auf Grundlage selbstorganisierender Karten in Beziehung zueinander ausgewertet werden, indem eine topologieerhaltende, nichtlineare Projektion von Daten der relevanten Prozeßgrößen auf eine mehrdimensionale neuronale Karte realisiert wird, dadurch gekennzeichnet, daß zur Beurteilung aktueller Prozeßzustände (z.B. Z1)
a) auf der Karte zuvor erfaßte Prozeßzustände (z, z+1) dargestellt werden, die optimale bzw. fehlerhafte Prozeßzustände oder unterschiedliche Lastzustände sind, und
b) wenigstens eine Trajektorie von Prozeßzuständen dargestellt wird, die zu unterschiedlichen Zeitpunkten (t) ermittelt wurden.

2. Verfahren nach Anspruch 1, dadurch gekennzeichnet, daß mehrere Trajektorien übereinandergelegt dargestellt werden, wodurch ein Vergleich von Prozeßverläufen ermöglicht ist.

3. Verfahren nach einem der vorstehenden Ansprüche, dadurch gekennzeichnet, daß seine Durchführung in nachstehenden Schritten erfolgt:
a) Aufnahme und Auswahl der Prozeßgrößen und Aufbereitung der Daten,
b) Entfaltung des selbstorganisierenden, neuronalen Netzes im Zustandsraum der Anlage, basierend auf Algorithmus von T. Kohonen, wobei die Prozeßwerte der relevanten Prozeßgrößen verwendet werden,
c) Darstellung des entfalteten Netzes als neuronale Karte,
d) Projektion der hochdimensionalen Anlagenzustände auf die neuronale Karte, basierend auf sogenannten winner-takes-all und/oder winner-takes-most Algorithmen, mit anschließender Visualisierung der aufsummierten Gewinnerraten der einzelnen Neuronen auf der Karte,
e) Anbindung der so vorbereiteten Karte an den Prozeß zur Darstellung der zu Zeitpunkten t ermittelten aktuellen Prozeßzustände (z.B. Z1) durch Markierung (z.B. durch einen schwarzen Kreis) des jeweiligen Gewinnerneurons,
f) graphische Verbindung von Gewinnerneuronen zur Bildung einer Trajektorie, und
g) gegebenenfalls Übereinanderlegen von Trajektorien verschiedener Prozeßvorgänge.

4. Verfahren nach Anspruch 1, dadurch gekennzeichnet, daß die technische Anlage eine Kraftwerksanlage oder ein Teil einer solchen Anlage ist.

5. Verfahren nach Anspruch 1 oder 2, dadurch gekennzeichnet, daß die mehrdimensionale Darstellung durch eine Datenprojektion auf eine zweidimensionale neuronale Karte, insbesondere eine farbcodierte Karte realisiert wird.

6. Verfahren nach Anspruch 1 oder 2, dadurch gekennzeichnet, daß die mehrdimensionalle Darstellung durch eine Datenprojektion auf eine höhencodierte Karte erfolgt.

## Claims

1. Method for the multidimensional representation of process states of an industrial plant, in which method all the variables relevant to a process are collected together and, by means of a neural analysis on the basis of self-organizing maps, are evaluated in relation to one another, in that a topology-obtaining, nonlinear projection of data on the relevant process variables onto a multidimensional neural map is implemented, characterized in that in order to assess current process states (e.g. Z1).
a) on the map previously detected process states (z, z + 1) which are optimum or faulty process states or different load states are displayed, and
b) at least one trajectory of process states which were detected at different times (t) is represented.

2. Method according to Claim 1, characterized in that a plurality of trajectories are represented superimposed on one another, which makes a comparison of process sequences possible.

3. Method according to one of the preceding claims, characterized in that it is carried out in the following steps:
a) recording and selection of the process variables and conditioning of the data,
b) developing the self-organizing neural network in the state space of the plant, based on the algorithm of T. Kohonen, the process values of the relevant process variables being used,
c) representing the developed network as a neural map,
d) projecting the high-dimensional plant states onto the neural map, based on so-called winner-takes-all and/or winner-takes-most algorithms, with subsequent visualization of the summed winning rates of the individual neurons on the map,
e) linking the map prepared in this way to the process in order to represent the current process states (e.g. Z1) determined at times t by marking the respective winning neuron (e.g. by means of a black circle),
f) connecting winning neurons graphically to form a trajectory, and
g) if appropriate, superimposing trajectories from different process procedures.

4. Method according to Claim 1, characterized in that the industrial plant is a power station plant or a part of such a plant.

5. Method according to Claim 1 or 2, characterized in that the multidimensional representation is implemented by means of a data projection onto a two-dimensional neural map, in particular a colour-coded map.

6. Method according to Claim 1 or 2, characterized in that the multidimensional representation is performed by means of a data projection onto a height-coded map.

## Revendications

1. Procédé de représentation multi-dimensionnelle d'états de processus dans une installation technique, selon lequel on regroupe toutes les grandeurs intéressant un processus et on les exploite en relation les unes avec les autres par une analyse neuronale sur la base de cartes auto-organisatrices, en réalisant une projection non-linéaire, conservant la topologie, sur une carte neuronale multi-dimensionnelle de données pour les grandeurs de processus concernées, caractérisé par le fait que pour examiner des états de processus actuels (par exemple Z1)
a) on représente sur la carte des états de processus qui ont été mesurés antérieurement (z, z+1) et qui sont des états de processus optimaux ou erronés et
b) on représente au moins une trajectoire d'états de processus qui ont été déterminés à différents instants (t).

2. Procédé selon la revendication 1, cartactérisé par le que l'on représente en les superposant plusieurs trajectoires.

3. Procédé selon une des revendications précédentes caractérisé par le fait que sa mise en oeuvre comprend les étapes suivantes :
a) enregistrement et sélection des grandeurs de processus et préparation des données,
b) déploiement du réseau neuronal auto-organisateur dans l'espace d'états de l'installation, en s'appuyant sur l'algorithme de T Kohonen, les valeurs de processus des grandeurs de processus concernées étant utilisées,
c) représentation du réseau déployé sous forme de carte,
d) projection sur la carte neuronale des états à forte dimensionnalité de l'installation, en s'appuyant sur des algorithmes de type "le gagnant prend tout" et/ou "le gagnant prend la plus grande part" suivie d'une visualisation des parts cumulées du gagnant des différents neurones sur la carte,
e) rapprochement de la carte ainsi préparée du processus pour représenter les états de processus actuels (par exemple Z1) déterminés aux instants (t) par repérage (par exemple à l'aide d'un cercle noir) du neurone gagnant concerné,
f) liaison graphique de neurones gagnants pour former une trajectoire et
g) le cas échéant supeprosition des trajectoires de différents processus.

4. Procédé selon la revendication 1, caractérisé par le fait que l'installation technique est une centrale thermique ou une partie d'une telle installation.

5. Procédé selon la revendication 1, caractérisé par le fait que la représentation multidimensionnelle est réalisée une projection de données sur une carte neuronale bidimensionnelle, en particulier sur une carte à codage par couleurs.

6. Procédé selon la revendication 1 ou 2, caractérisé par le fait que la représentation multidimensionnelle est réalisée une projection de données sur une carte à codage par hauteurs.
